# EUROPEAN PATENT APPLICATION

(11) **EP 4 388 860 A1**
(43) Date of publication of application: **26.06.2024**
(21) Application number: 22214765.4
(22) Date of filing: 19.12.2022
(51) Int. Cl.: A01F 12/18, A01F 7/04, A01F 7/06

(54) **MODULAR COMBINE HARVESTER**

(71) Applicant: CNH Industrial Belgium N.V., 8210 Zedelgem (BE)
(72) Inventor: Missotten, Bart M.A., 3020 Herent (BE); Tallir, Frederik, 8600 Esen (BE); Jongmans, Dré W.J., 4791 AG Klundert (NL); Van Overschelde, Pieter, 8200 Sint-Andries (BE); Reubens, Sam, 8200 Sint-Michiels (BE)
(74) Representative: CNH Industrial IP Department

(57) **Abstract**

The present invention is related to a combine harvester comprising a modular grain handling section for threshing and separating grain kernels from a harvested grain crop. The modular grain handling section comprises a transverse stage, a first rotary stage, and a second rotary stage. The transverse stage comprises a rotatable transverse drum and a transverse concave arranged in parallel thereto, the transverse drum and/or the transverse concave being configurable to selectively operate the transverse stage as either a feeding stage or a threshing stage. The first rotary stage comprises a first end of a rotatable longitudinal drum and a first longitudinal concave arranged in parallel thereto, the first end of the longitudinal drum and/or the first longitudinal concave being configurable to selectively operate the first rotary stage as either a threshing stage or a separation stage. The second rotary stage comprises a second end of the longitudinal drum and a second longitudinal concave arranged in parallel thereto, the second end of the longitudinal drum and the second longitudinal concave being configured to operate the second rotary stage as a separation stage.

## Description

### TECHNICAL FIELD

The present invention relates to a combine harvester comprising a modular grain handling section for threshing and separating grain kernels from a harvested grain crop.

### BACKGROUND

Combine harvesters, also simply called combines, are complex driving agricultural machinery comprising a variety of mechanical tools for reaping grain crops from a field, feeding the reaped crop into the crop processing core of the combine, threshing the grain, and separating the threshed grain from the straw and other non-grain material. In most combine harvester a cleaning section is provided for blowing the chaff off the separated grain kernels and the cleaned grain is then transported to a clean grain tank wherein the grain is temporarily stored until the grain tank is unloaded into a trailer or at a grain storage facility.

While most modern combine harvester do share most, if not all, of the above-described functionality, significant variation exists in the type and design of all the mechanical tools used for achieving that functionality. Most notable are the differences that can be observed in the threshing and separation sections of different combine harvesters. Combine harvesters of the so-called conventional type, comprise one or more rotatable threshing drum that is arranged transversely with respect to the driving direction. The harvested crop is threshed between rasp bars on the rotating drum and a metal grating in a threshing concave installed parallel thereto. After this threshing stage, one or more transversely arranged separation drums comb through the grain-straw mixture to separate the threshed grain from the straw. Gravity causes the heavier grain kernels to fall through the gratings of the threshing and separation concaves onto the cleaning system. Straw walkers transport the lighter straw material to the rear of the combine, where the straw is either dropped in a swath behind the combine or chopped and spread over the field.

In the 1970's Sperry-New Holland introduced a so-called rotary combine with a threshing and separation section comprising a duo of parallel longitudinally arranged rotating cylinder instead of the transverse threshing and separation drums. At the front end of this rotating cylinder, rasp bars are installed for performing the threshing. The remaining part of the rotating cylinder is equipped as a separation drum. Since then, alternative designs have successfully been introduced in the market. For example, rotary combines with only a single rotor and hybrid models using transverse threshing drums and a rotary separation section are commonly used.

Different types of threshing and separation systems are preferred in different situations. Different crop types, such as wheat, corn, and rice, and different crop type varieties may need more or less aggressive threshing. When the straw residues is intended to be used as food for cattle, combine harvesters of the conventional type are often preferred because of the high quality straw they can deliver. Rotary combines are often preferred when a higher threshing capacity (tons/hour) is desired. Similarly, threshing and separation drums and concaves of different designs are used for different crops. For example, rasp bars, separation elements, and concave gratings may have different geometries optimised for specific crops.

Farmers growing various types of crops or harvesting at different periods of the year, often need multiple combine harvesters to be able to properly harvest all their crops. It is possible and known to modify or completely exchange a threshing and/or separation section in a workshop when, for example, switching between harvesting wheat and rice. Smaller modifications, such as for example adapting a concave clearance between a threshing drum and a threshing concave, can sometimes be done remotely, while driving. However, such modifications may be very time consuming or may only be partly successful in adapting the threshing and separation section to the farmer's needs.

There thus is a need for a combine harvester with a more adaptable and versatile threshing and separation section.

### SUMMARY OF THE INVENTION

According to an aspect of the invention there is provided a combine harvester comprising a modular grain handling section for threshing and separating grain kernels from a harvested grain crop. The modular grain handling section comprises a transverse stage, a first rotary stage, and a second rotary stage. The transverse stage comprises a rotatable transverse drum and a transverse concave arranged in parallel thereto, the transverse drum and/or the transverse concave being configurable to selectively operate the transverse stage as either a feeding stage or a threshing stage. The first rotary stage comprises a first end of a rotatable longitudinal drum and a first longitudinal concave arranged in parallel thereto, the first end of the longitudinal drum and/or the first longitudinal concave being configurable to selectively operate the first rotary stage as either a threshing stage or a separation stage. The second rotary stage comprises a second end of the longitudinal drum and a second longitudinal concave arranged in parallel thereto, the second end of the longitudinal drum and the second longitudinal concave being configured to operate the second rotary stage as a separation stage.

In contrast with the prior art, the combine harvester of the invention does not just allow for adapting an aggressiveness of the threshing or separation section to the harvested crop type and current harvesting conditions. With the now claimed combine harvester it is possible to turn a rotary combine, in which the threshing and the separation are both done with a rotatable longitudinal drum, into a hybrid combine, in which the threshing happens at a transverse drum followed by a full length longitudinal drum. If needed, both the transverse drum and the first end of the longitudinal drum can be used for threshing to maximise the threshing capacity of the combine harvester. This modular and variable design of the threshing and separation system of the combine harvester thus allows the user to optimise its operation for high grain quality, high threshing capacity, or a suitable compromise between the two.

For a proper understanding of the current invention, it is important to clearly define the differences between the feeding stage, the threshing stage, and the separation stage of the grain handling process.

The optional feeding stage in this process takes place at the transverse drum and only serves to pass the crop on to the rotary threshing stage. The crop handled at the feeding stage is received from a feeder that brings the reaped crop from the header to the grain handling section. Fingers or other crop engaging elements protruding from the transverse drum pick up the crop and move it over the parallel crop engaging surface of the transverse concave towards the subsequent threshing stage. The crop engaging surface of the transverse concave is preferably substantially flat and closed to minimise damage to the crop. While the moving around of the crop will lead to some of the grain kernels being detached from the plant, this is not the actual purpose of the transverse stage when arranged as a feeding stage.

According to the invention, the threshing stage may be covered by the transverse stage and/or the first rotary stage of the grain handling section. The purpose of the threshing stage is to detach grain kernels from the harvested plants. The threshing is typically performed by rasp bars or other threshing elements mounted to the outer surface of the respective drum aggressively rubbing the crop against a grating that forms the crop engaging surface of a parallel concave. Openings in the grating allow some of the threshed grain to fall through the concave onto a cleaning section that may be provided underneath the grain handling section. Most of the detached grain kernels are, however, transported downstream together with the remaining plant material.

In the separation section, which in accordance with the current invention includes at least the second rotary stage and optionally also the first rotary stage of the grain handling section, the mixture of grain and material other than grain (MOG) is stirred to make the heavier grain kernels fall down onto the cleaning section before the residue material is expelled from the back of the combine. This grain kernel separation is typically achieved using separation elements that are provided on the outer surface of the separation drum that agitate the mixture, while rubbing the material against the grating of the parallel concave.

It is noted that, although all three grain handling stages may involve some interaction of elements on the surface of a rotating drum with the inner surface of a parallel concave, a skilled person will have no problem distinguishing between these three stages. The geometry of the crop engaging elements and the opposing concave surfaces are sufficiently different between feeding, threshing, and separation stages to enable a skilled person to directly distinguish between the three.

In preferred embodiments, the transverse drum and the longitudinal drum comprise crop engaging elements, an orientation and/or geometry of at least some of the crop engaging elements being adaptable through an electronically controlled actuator. With such electronically adaptable crop engaging elements it is possible for the respective grain handing stage to switch quickly and easily between feeding and threshing or between threshing and separating. The actuator may, for example, be controlled remotely from the driver cabin or with a mobile phone app. Possibly, the actuator may even be controlled while harvesting.

Alternatively, or additionally, the transverse concave and the first longitudinal concave may comprise gratings with openings for letting through grain kernels, a size and/or a geometry of at least some of the gratings being adaptable through an electronically controlled actuator. With such adaptable gratings it is possible for the respective grain handing stage to switch quickly and easily between feeding and threshing or between threshing and separating. The actuator may, for example, be controlled remotely from the driver cabin or with a mobile phone app. Possibly, the actuator may even be controlled while harvesting.

In a special embodiment, the openings in the gratings of the transverse concave are configurable to be substantially closed. Substantially closed can herein be defined as sufficiently small to prevent grain kernels to fall through. Such substantially closed openings significantly reduce the friction between the moving crop and the inner concave surface, thereby reducing grain damage at the transverse stage when functioning as a feeder stage. For the same reason, it is preferred that the inner concave surface is substantially flat when the openings in the gratings of the transverse concave are substantially closed.

In some embodiments, the transverse concave and/or the first longitudinal concave comprise a concave frame with multiple detachable grating modules. This allows for providing many different grating modules especially adapted for use in specific crops and harvesting conditions, while simultaneously making it easy to quickly convert between different functions and technical requirements. For example, grating modules especially designed for efficient threshing in the transverse stage of the grain handling section could be easily replaced by completely flat modules that are ideal for using the transverse stage as a feeding stage. Possibly, a longitudinal concave frame below the first end of the longitudinal drum is designed such that the threshing grating modules that are taken from the transverse concave frame can then be installed and used in the longitudinal concave frame.

The transverse drum and/or the first end of the longitudinal drum may comprise a plurality of detachable crop engaging elements. This allows for providing many different crop engaging elements especially adapted for use in specific crops and harvesting conditions, while simultaneously making it easy to quickly convert between different functions and technical requirements. For example, rasp bars used in the first rotary stage may be replaced with separation fingers when changing the function of this grain handling stage from threshing to separation. Possibly, the transverse drum is designed such that the rasp bars that are taken from the first end of the longitudinal drum can then be installed and used in the transverse drum.

### BRIEF DESCRIPTION OF THE DRAWINGS

Embodiments of the invention will now be described by way of example with reference to the accompanying drawings, in which:
Figure 1 schematically shows an embodiment of a combine harvester as known from the prior art.
Figure 2 schematically shows an embodiment of a combine harvester according to an embodiment of the invention.

### DETAILED DESCRIPTION

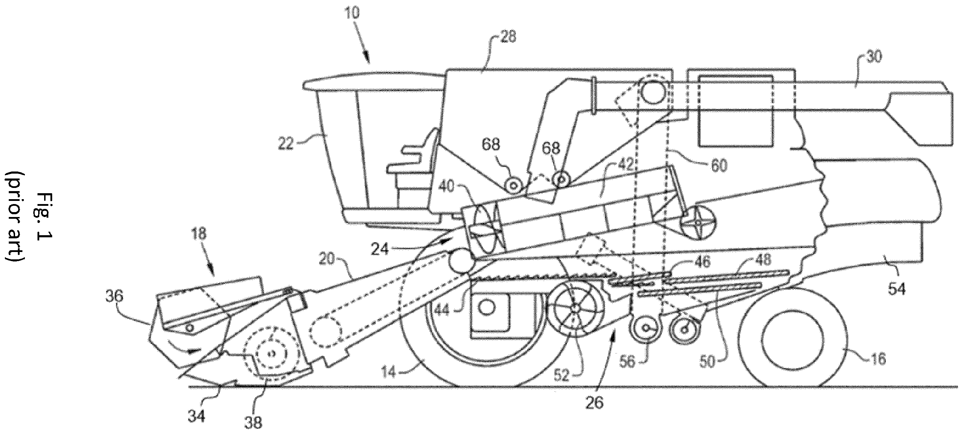

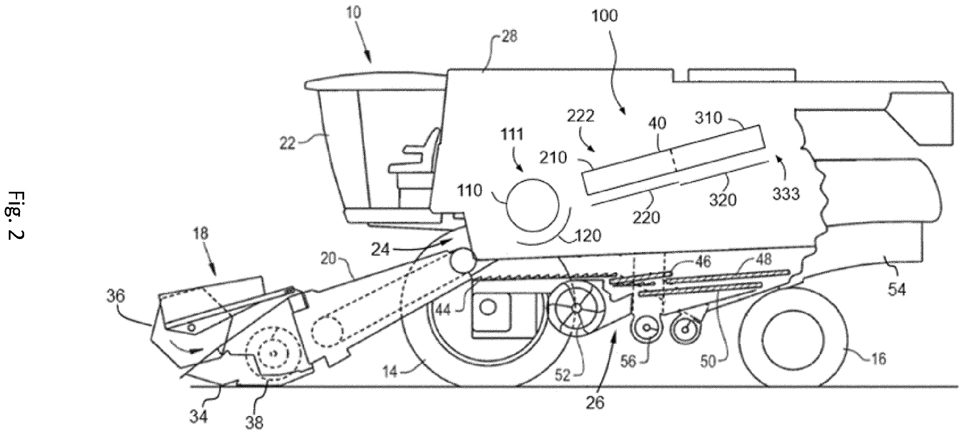

Figure 1 schematically shows a known agricultural harvester in the form of a combine harvester 10. This known example of a rotary combine harvester 10 is shown to illustrate its main functional parts. Below, with reference to Figure 2, it will be described how the same functionality is achieved with a combine harvester 10 according to an embodiment of the invention. The combine harvester 10 generally includes front and rear round engaging wheels 14, 16, a header 18, a feeder 20, an operator cabin 22, a threshing and separation system 24, a cleaning system 26, a grain tank 28 and an unloading tube 30.

A header 18 is mounted to the front of the combine harvester 10 and includes a cutter bar 34 for severing crops from a field during forward motion of the combine. A rotatable reel 36 feeds the crop into the header 18, and a double auger 38 feeds the severed crop laterally from each side towards the feeder 20. The feeder 20 conveys the severed crop to the threshing and separation system 24.

The threshing and separation system 24 is of the axial-flow type and comprises a threshing rotor 40 at least partially located and rotatable within a threshing concave 42. The threshing concave may take the form of a perforated concave. Grain from the severed crop is threshed and separated from the material other than grain (MOG) by the action of the threshing rotor 40 within the threshing concave 42. Larger elements of MOG, such as stalks and leaves do not pass through the perforations in the threshing concave 42 and are discharged from the rear of the combine harvester 10. Grain and smaller elements of MOG (small MOG henceforth), such as chaff, dust and straw are small enough to pass through the perforations in the threshing concave 42 and are then discharged from the threshing and separation system 24.

Grain and small MOG that has successfully passed the threshing and separation system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood 54.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a for-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

Figure 2 schematically shows an embodiment of a combine harvester 10 according to an embodiment of the invention. Features that may be identical to features of the prior art embodiment shown in Figure 1 are identified by the same reference numbers. Some features that both embodiments may have in common, for example the grain elevator 60 are omitted from figure 2 to free up some space for clearly illustrating an innovative grain handling section 100 according to the current invention.

The grain handling section 100 is provided for threshing and separating grain kernels from a harvested grain crop and comprises three stages: one transverse stage 111, a first rotary stage 222 and a second rotary stage 333. The transverse stage 111 comprises a rotatable transverse drum 110 and a transverse concave 120 arranged in parallel thereto. The transverse drum 110 and/or the transverse concave 120 are configurable to selectively operate the transverse stage 111 as either a feeding stage or a threshing stage. The first rotary stage 222 comprises a first end 210 of a rotatable longitudinal drum 40 and a first longitudinal concave 220 arranged in parallel thereto. The first end 210 of the longitudinal drum 40 and/or the first longitudinal concave 220 is configurable to selectively operate the first rotary stage 222 as either a threshing stage or a separation stage. The second rotary stage 333 comprises a second end 310 of the longitudinal drum 40 and a second longitudinal concave 320 arranged in parallel thereto, the second end 310 of the longitudinal drum 40 and the second longitudinal concave 320 are configured to operate the second rotary stage 333 as a separation stage. This modular and variable design of the grain handling section 100 of the combine harvester 10 allows the user to optimise its operation for high grain quality, high threshing capacity, or a suitable compromise between the two.

The modular nature and variable functionality of the three consecutive stages 100, 200, 300 of the grain handling section 100 together provide the flexibility to operate the grain combine harvester 10 in one of three distinct modes that are all listed in the table below.

| | transverse stage 111 | first rotary stage 222 | second rotary stage 333 |
|---|---|---|---|
| rotary | feeding | threshing | separation |
| hybrid | threshing | separation | separation |
| hard threshing | threshing | threshing | separation |

Of these three modes, the rotary mode is the most similar to the threshing and separation system 24 of the combine harvesters 10 of Figure 1. In this mode, the grain handling section 100 is configured for maintaining optimal grain quality. Both the threshing and separation are done by means of the longitudinal drum 40 and the corresponding concaves 220, 320. The transverse stage 111 only serves to receive the incoming crop from the feeder 20 and deliver it at the first end 210 of the longitudinal drum 40, preferably with minimal damage to the grain or the straw. When the transverse stage 111 is configured as a feeding stage, fingers or other crop engaging elements protruding from the transverse drum 110 pick up the crop and move it over the parallel crop engaging surface of the transverse concave 120 towards the first rotary stage 222. The crop engaging surface of the transverse concave 120 is preferably substantially flat and closed to minimise damage to the crop. While the moving around of the crop will lead to some of the grain kernels being detached from the plant, this is not the actual purpose of the transverse stage 111 when arranged as a feeding stage.

Detaching grain kernels from the plant is what the threshing stages are provided for. One important difference between the three available modes of operation is how and where the threshing takes place. In the combine harvester 10 of Figure 2, the threshing may take place at the transverse stage 111 and/or at the first rotary stage 222 of the grain handling section 100. The purpose of the threshing stage is to detach grain kernels from the harvested plants. The threshing is typically performed by rasp bars or other threshing elements mounted to the outer surface of the respective drum 110, 210 aggressively rubbing the crop against a grating that forms the crop engaging surface of the concave 120, 220 arranged in parallel therewith. Openings in the grating allow some of the threshed grain to fall through the concave 120, 220 onto the preparation pan 44, the pre-cleaning sieve 46, or the upper sieve 48 of the cleaning system 26. Most of the detached grain kernels are, however, transported downstream to the separation stage, together with the remaining plant material.

In the separation stage, which in the combine harvester 10 of Figure 2 includes at least the second rotary stage 333 and optionally also the first rotary stage 222 of the grain handling section 100, the mixture of grain and material other than grain (MOG) is stirred to make the heavier grain kernels fall down onto the cleaning system 26 before the residue material is expelled from the back of the combine 10. This grain kernel separation is achieved using separation elements that are provided on the outer surface of the longitudinal drum 40 that agitate the mixture, while rubbing the material against the grating of the parallel concave 220, 320.

When in hybrid mode, the grain handling section 100 uses the transverse stage 111 for threshing the harvested crop, while the full length of the rotary drum 40 is used for separating the grain kernels from the non-grain material. One of the advantages of this relatively long separation stage is that it makes it possible to efficiently separate the grain kernels from the non-grain material, also in humid conditions when the plant material is heavy and lose grain kernels may tend to adhere to the straw.

In the hard threshing mode, both the transverse stage 111 and the first rotary stage 222 are configured as threshing stages. This hard threshing mode is advantageous in crops and conditions wherein the grain kernels hold on to the grain ears more strongly than usual, for example because the harvesting is done before the plant material has fully dried.

To allow the transverse stage 111 and the first rotary stage 222 to switch between their different functions as listed in the table above, the transverse drum 110 and the longitudinal drum 40 may comprise crop engaging elements with an adaptable orientation or geometry. When the crop engaging elements on the drum surface are not symmetric, changing their orientation by rotation relative to the drum cylinder they are mounted on, and relative to the concave surface they cooperate with, results in a change of the aggressiveness with which the incoming plant material is rubbed against the concave 120, 220. The same can be achieved by changing the geometry of the crop engaging elements, for example by withdrawing or extending parts of the crop engaging elements. When functioning as a threshing stage, the interaction with the plant material is more aggressive than when functioning as separation stage. When acting as a feeding stage, the main task of the crop engaging elements is to just move the plant material and the aggressiveness kept to a minimum.

Adapting the orientation and/or geometry of the crop engaging elements may be done by an engineer, in the field or in a workshop, when the harvester 10 is not driving. Preferably, such adjustments are possible by use of an electronically controlled actuator (not shown). With such electronically adaptable crop engaging elements it is possible for the respective grain handing stage to switch quickly and easily between feeding and threshing or between threshing and separating. The actuator may, for example, be controlled remotely from the driver cabin or with a mobile phone app. Possibly, the actuator may even be controlled while harvesting.

Similarly, a size and/or a geometry of one or more gratings of the transverse concave 120 and/or the first longitudinal concave 220 may be adaptable by hand, with the help of tools, or through an electronically controlled actuator. With such adaptable gratings it is possible for the respective grain handing stage to switch quickly and easily between feeding and threshing or between threshing and separating. The actuator may, for example, be controlled remotely from the driver cabin or with a mobile phone app. Possibly, the actuator may even be controlled while harvesting.

In a special embodiment, the openings in the gratings of the transverse concave 120 are configurable to be substantially closed. Substantially closed can herein be defined as sufficiently small to prevent grain kernels to fall through. Such substantially closed openings significantly reduce the friction between the moving crop and the inner concave surface, thereby reducing grain damage at the transverse stage 111 when functioning as a feeder stage. For the same reason, it is preferred that the inner concave surface is substantially flat when the openings in the gratings of the transverse concave 120 are substantially closed. Closing the concave openings may, for example, be done by rotating or otherwise moving elements into the openings. Alternatively, a photo camera style diaphragm may be used. Preferably, a lever-operated mechanism is used for opening and closing the openings in the gratings. The lever may either be operated by a user or by an electronically controlled actuator.

When transitioning between the available grain handling modes, a distance between one of the drums 110, 40 and the corresponding concave 120, 220 may be adapted in accordance with the changed functionality of respective grain handling stage 111, 222. For example, the gap between the transverse drum 110 and the transverse concave 120 may be considerably larger when the transverse stage 111 is used for feeding than when it is used for threshing. Similarly, the gap between the longitudinal drum 40 and the first longitudinal concave 220 may be made smaller when transitioning from a separation function to a threshing function.

In some embodiments, the transverse concave 120 and/or the first longitudinal concave 220 comprise a concave frame with multiple detachable grating modules. This allows for providing many different grating modules especially adapted for use in specific crops and harvesting conditions, while simultaneously making it easy to quickly convert between different functions and technical requirements. For example, grating modules especially designed for efficient threshing in the transverse stage 111 of the grain handling section 100 could be easily replaced by completely flat modules that are ideal for using the transverse stage 111 as a feeding stage. Possibly, a longitudinal concave frame below the first end of the longitudinal drum 40 is designed such that the threshing grating modules that are taken from the transverse concave frame 120 can then be installed and used in the longitudinal concave frame 220.

The transverse drum 110 and/or the first end 210 of the longitudinal drum 40 may comprise a plurality of detachable crop engaging elements. This allows for providing many different crop engaging elements especially adapted for use in specific crops and harvesting conditions, while simultaneously making it easy to quickly convert between different functions and technical requirements. For example, rasp bars used in the first rotary stage 222 may be replaced with separation fingers when changing the function of this grain handling stage from threshing to separation. Possibly, the transverse drum 110 is designed such that the rasp bars that are taken from the first end 210 of the longitudinal drum 40 can then be installed and used in the transverse drum 110.

A modular and versatile grain handling section 100 as described herein can further easily be adapted for harvesting rice. In order to make the grain handling section suitable for stripping and separating the rice from the plant it is attached to, the crop engaging elements on the transverse and rotary drums 110, 40 may be replaced by rice stripping tines as are typically used for this purpose. Further, the transverse concave 120, the first longitudinal concave 220, and preferably also the second longitudinal concave 320 may be especially configured for cooperating with such rice stripping tines. Alternatively, one or more of the drums 110, 40 and concaves 120, 220, 320 are replaced with versions designed for stripping and separating rice.

## Claims

1. A combine harvester (10) comprising a modular grain handling section (100) for threshing and separating grain kernels from a harvested grain crop, the modular grain handling section comprising:
- a transverse stage (111) comprising a rotatable transverse drum (110) and a transverse concave (120) arranged in parallel thereto, the transverse drum and/or the transverse concave being configurable to selectively operate the transverse stage as either a feeding stage or a threshing stage,
- a first rotary stage (222) comprising a first end (210) of a rotatable longitudinal drum (40) and a first longitudinal concave (220) arranged in parallel thereto, the first end of the longitudinal drum and/or the first longitudinal concave being configurable to selectively operate the first rotary stage as either a threshing stage or a separation stage, and
- a second rotary stage (333) comprising a second end (310) of the longitudinal drum (40) and a second longitudinal concave (320) arranged in parallel thereto, the second end of the longitudinal drum and the second longitudinal concave being configured to operate the second rotary stage as a separation stage.

2. A combine harvester (10) as claimed in claim 1, wherein the transverse drum (110) and the longitudinal drum (40) comprise crop engaging elements, and wherein an orientation and/or geometry of at least some of the crop engaging elements is adaptable through an electronically controlled actuator.

3. A combine harvester (10) as claimed in claim 1 or 2, wherein the transverse concave (120) and the first longitudinal concave (220) comprise gratings with openings for letting through grain kernels, and wherein a size and/or a geometry of at least some of the gratings is adaptable through an electronically controlled actuator.

4. A combine harvester (10) as claimed in claim 3, wherein the openings in the gratings of the transverse concave (120) are configurable to be substantially closed.

5. A combine harvester (10) as claimed in claim 4, wherein an inner surface of the transverse concave (120) is substantially flat when the openings in the gratings of the transverse concave (120) are substantially closed.

6. A combine harvester (10) as claimed in any preceding claim, wherein the transverse concave (120) and/or the first longitudinal concave (220) comprise a concave frame with multiple detachable grating modules.

7. A combine harvester as claimed in any preceding claim, wherein the transverse drum (110) and/or the first end (210) of the longitudinal drum (40) comprise a plurality of detachable crop engaging elements.

8. A combine harvester (10) as claimed in any preceding claim, wherein a clearance between the transverse drum (110) and the transverse concave (120) and/or a clearance between the longitudinal drum (40) and the first longitudinal concave (220) is adjustable through and electronically controlled actuator.
